(19) Europäisches Patentamt
European Patent Office
Office européen des brevets

(11) **EP 1 855 125 B1**

(12) **FASCICULE DE BREVET EUROPEEN**

(45) Date de publication et mention de la délivrance du brevet:
**15.12.2010 Bulletin 2010/50**

(51) Int Cl.:
*G01S 13/90* *(2006.01)*          *G01S 7/36* *(2006.01)*

(21) Numéro de dépôt: **07107812.5**

(22) Date de dépôt: **09.05.2007**

(54) **Procédé de filtrage des signaux de brouillage pour une antenne mobile multivoie**

Filterverfahren für Störzeichen für eine mobile Mehrwegantenne

Method of filtering jamming signals for a multi-channel mobile antenna

(84) Etats contractants désignés:
**DE ES GB IT**

(30) Priorité: **12.05.2006 FR 0604238**

(43) Date de publication de la demande:
**14.11.2007 Bulletin 2007/46**

(73) Titulaire: **THALES**
**92200 Neuilly sur Seine (FR)**

(72) Inventeurs:
• **Broussolle, Joan**
**92000 Nanterre (FR)**
• **Savy, Laurent**
**92170 Vanves (FR)**
• **Montecot, Marc**
**78170 La Celle Saint Cloud (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
• **KLEMM R: "Interrelated problems in space time processing for SAR and ISAR" IEE PROCEEDINGS: RADAR, SONAR & NAVIGATION, INSTITUTION OF ELECTRICAL ENGINEERS, GB, vol. 145, no. 5, 1 octobre 1998 (1998-10-01), pages 297-302, XP006011435 ISSN: 1350-2395**
• **SOUMEKH M: "SAR-ECCM using phase-perturbed LFM chirp signals and DRFM repeat jammer penalization" RADAR CONFERENCE, 2005 IEEE INTERNATIONAL ARLINGTON, VA, USA 9-12 MAY 2005, PISCATAWAY, NJ, USA, IEEE, 9 mai 2005 (2005-05-09), pages 507-512, XP010801752 ISBN: 0-7803-8881-X**
• **ROSENBERG L; GRAYA D: "Robust interference suppression for multichannel SAR" PROCEEDINGS OF THE EIGHT INTERNATIONAL SYMPOSIUM ON SYDNEY, AUSTRALIA AUGUST 2005 28-31, 28 août 2005 (2005-08-28), pages 883-886, XP002411709 Piscataway, NJ, USA,IEEE**

**Description**

La présente invention concerne un procédé de filtrage des signaux de brouillage pour une antenne mobile multivoie. Elle s'applique par exemple dans le domaine de l'imagerie SAR.

Embarqué à bord d'un aéronef, un radar fonctionnant en mode SAR, d'après l'expression anglo-saxonne de « Synthetic Aperture Radar », fournit une image bi-dimensionnelle du sol faisant clairement apparaître la configuration des installations. La forme d'onde SAR est une forme d'onde cohérente adaptée à la réception des signaux rétro-diffusés par le sol. L'image finale reflète la puissance rétro-diffusée, celle-ci dépendant de la nature du terrain. C'est en fait une cartographie du coefficient de rétro-diffusion électromagnétique du sol. Pour construire l'image finale, une échelle de puissance est associée à une palette de couleur, généralement du noir au blanc en passant par toutes les nuances de gris ou de vert par exemple, une nuance de couleur caractérisant un niveau de puissance. Par exemple un signal réfléchi par du bitume est renvoyé avec peu de puissance et peut être associé à la couleur noire. Un signal réfléchi par un matériau métallique est renvoyé avec beaucoup de puissance et peut être associé à la couleur blanche.

Le Traitement SAR est basé sur une analyse Doppler du signal permettant d'atteindre de très fine résolution suivant l'axe transverse à la direction reliant le centre de phase de l'antenne au centre de la zone imagée. En fait, pour obtenir la même résolution uniquement à l'aide de la seule sélectivité angulaire de l'antenne, il faudrait une largeur d'antenne immense la rendant totalement inadaptée aux applications aéroportées. Une antenne fonctionnant en mode SAR est alors équivalente à une antenne virtuelle immense qui fonctionnerait en mode classique, d'où la dénomination anglo-saxonne de « Synthetic Aperture Radar ».

Les modes radar SAR sont particulièrement sensibles au brouillage. En effet pour assurer de fines résolutions, le temps d'éclairement radar et la bande émise sont importants, laissant un temps suffisant à un brouilleur pour générer un signal de bruit dont le spectre est compris dans la bande de fréquence utilisée. Un brouilleur est un dispositif d'écoute et d'émission d'ondes électromagnétiques. Lorsqu'il reçoit des signaux qu'il reconnaît comme ayant été émis par un radar, il émet des signaux à la même fréquence porteuse sensés parasiter la rétro-diffusion des signaux reçus. Ainsi, le radar reçoit les signaux émis par le brouilleur et les interprète comme ses propres impulsions rétro-diffusées. Mais leur traitement numérique conduit à des données inexploitables. Par exemple, dans le cas d'un radar fonctionnant en mode SAR et exposé à un brouilleur, l'image est dépourvue de tout contraste, totalement monochrome en vert par exemple, ne permettant de distinguer aucune installation au sol.

Il existe déjà des méthodes permettant de filtrer les signaux reçus par le radar en minimisant l'effet des signaux parasites de brouillage. Par exemple, dans les modes radars air/air possédant une antenne de réception à plusieurs voies, sont mis en oeuvre des algorithmes basés sur la technique d'Opposition des Lobes Secondaires (OLS). La technique OLS consiste à estimer un unique filtre, combinaison linéaire des multiples voies de réception à disposition, minimisant la puissance de bruit de brouillage.

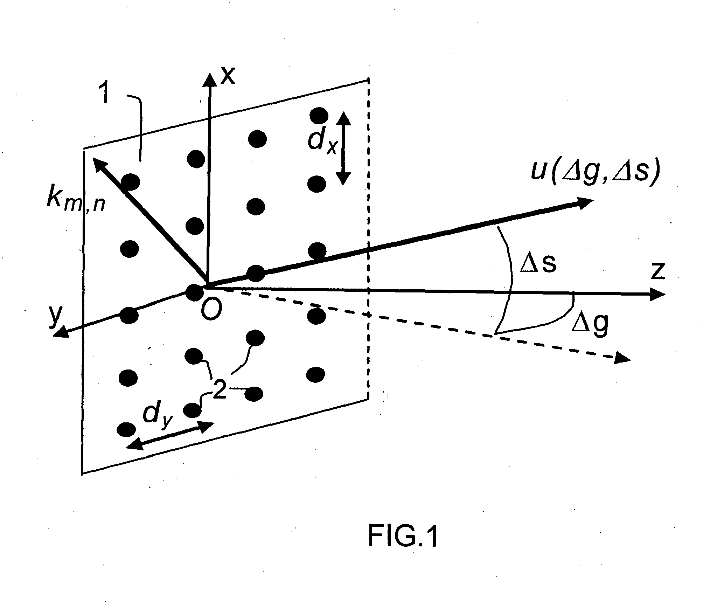

La figure 1 illustre par une vue en perspective un exemple d'antenne bi-dimensionnelle multivoie utilisable en mode SAR. Plusieurs capteurs 2 sont disposés sur une antenne 1. Ils sont régulièrement espacés d'une distance $d_x$ sur un axe (O, x) et d'une distance $d_y$ sur un axe (O, y), les axes (O, x) et (O, y) étant dans le plan de l'antenne 1. Une voie de réception spatiale de l'antenne 1 correspond à l'un des capteurs 2 et à l'ensemble des éléments de connectique qui le relient à un récepteur final. Par extension, une voie de réception est assimilée aux signaux perçus par le capteur et transitant par les éléments de connectique associés jusqu'au récepteur final. Deux voies ne sont jamais strictement identiques, notamment à chacune des voies correspond un gain spécifique. Le gain d'une voie est également fonction de la direction d'arrivée du signal.

En effet, si une antenne à N voies spatiales est considérée, pour un brouilleur provenant de la direction $u_b$ et un signal utile provenant de la direction $u_u$, le signal $Z_n$ sur une voie n à un instant donné s'écrit selon l'équation (1):

$$Z_n = \alpha\, S_n\left(\vec{u}_u\right) + \beta\, S_n\left(\vec{u}_b\right) + n_{0_n} \qquad\qquad (1)$$

Avec :

$\alpha$ : amplitude complexe du signal utile,
$\beta$ : amplitude complexe du signal de brouillage,
$U_u$ : direction d'arrivée du signal utile,
$U_b$ : direction d'arrivée du brouilleur,
$n_{on}$ : bruit thermique sur la voie n,
$S_n(\vec{u}_u)$ : gain de la voie n dans la direction $u_u$,
$S_n(\vec{u}u_b)$ : gain de la voie n dans la direction $u_b$.

A l'équation (1) valable pour une seule voie correspond l'équation vectorielle (2) décrivant le signal Z sur l'ensemble des voies, grâce à un vecteur Z de dimension N :

$$Z = \alpha\, S\left(\bar{u}_u\right) + X \qquad\qquad ( 2 )$$

Dans l'équation (2), X est un vecteur représentant la somme du bruit thermique et du bruit de brouillage. Le vecteur de contrainte $S(\vec{u}_u)$ caractérise le gain des diverses voies dans la direction $U_u$ du signal utile et $\alpha$ est l'amplitude complexe du signal utile.

Le principe de plusieurs méthodes d'antibrouillage connues, notamment la technique OLS, est d'appliquer un filtre unique au signal Z de manière à minimiser la puissance moyenne du bruit X par combinaison linéaire. Le traitement OLS fait l'hypothèse que le signal utile provient d'une direction unique au centre du lobe d'antenne. Un filtre est la donnée d'une matrice w de dimension 1 x N. Appliquer le filtre w au vecteur Z consiste à calculer le produit $w^H Z$, où $w^H$ désigne la matrice transposée et conjuguée de w, w ayant été choisi de manière à minimiser la puissance moyenne de bruit en sortie $E|w^H X|^2$ par combinaison linéaire dans le produit $w^H Z$ , E désignant l'espérance mathématique. Le diagramme de rayonnement correspondant à la voie spatiale virtuelle réalisée par la combinaison linéaire associée à w est maximum dans la direction $u_u$ et minimum dans la direction $u_b$ du brouilleur. Dans ce diagramme de rayonnement, la position du creux annulant le bruit de brouillage dépend de la direction inconnue d'arrivée de celui-ci. C'est pourquoi il est couramment dit que « w réalise une formation de faisceau adaptative ». Si la direction du signal utile $u_u$ est proche de la direction $u_b$ du brouilleur, le diagramme de rayonnement correspondant à la formation de faisceau présentera un maximum dans la direction $u_b$ du brouilleur, rendant l'antibrouillage avec le filtre w totalement inefficace.

Ainsi, un algorithme d'antibrouillage du type de la technique OLS, basé sur un seul filtre appliqué à l'ensemble de la scène observée, ne s'avère satisfaisant que pour des brouilleurs dépointés, c'est-à-dire reçu en dehors du lobe principal, dans les lobes secondaires de l'antenne. Or, un brouilleur situé dans le lobe principal de l'antenne est fortement envisageable d'un point de vue opérationnel, notamment dans le cadre de l'imagerie SAR. En effet les brouilleurs intentionnels sont placés à proximité des zones de terrain à masquer pour optimiser leur bilan de puissance et ils se situent donc très probablement dans le lobe principal de l'antenne. Le procédé de filtrage selon l'invention se propose de pallier les inconvénients de ces techniques de filtrage par combinaison linéaire des voies, dont elle retient toutefois le principe de base.

Dans un article intitulé « Interrelated problems in space-time processing for SAR and ISAR » (IEE Proceedings : Radar, Sonar & Navigation - Vol.145, No 5 - October 1998), R.Klemm divulgue une méthode d'annulation des signaux de brouillage pour un radar fonctionnant en mode SAR.

Le procédé selon l'invention se propose d'appliquer plusieurs filtres à la scène observée, chaque filtre réalisant une combinaison linéaire des signaux reçus sur les différentes voies. Chaque filtre est adapté à une zone spécifique de la scène observée par l'utilisation des gains des voies dans la direction correspondant à la zone en question pour calculer les coefficients de la combinaison linéaire. Mais dans le cas d'une antenne multivoie sur un porteur mobile, la mise en oeuvre d'un tel procédé n'est pas sans difficultés. En effet, avec le mouvement du porteur les gains des voies changent même dans une zone précise de la scène observée et les différences de connectivité entre les voies parasitent les signaux à combiner à l'entrée du récepteur final. Par conséquent, le signal de bruit n'est pas stationnaire et n'est pas corrélé dans l'espace sur l'ensemble de la bande et du temps d'éclairement. Ainsi, le signal combinant les voies n'est pas correctement dissocié du bruit de brouillage. Après traitement numérique, les données ne sont pas exploitables.

L'invention a notamment pour but de pallier les difficultés précitées et fournit une méthode permettant d'éliminer efficacement la composante de bruit de brouillage dans chacune des zones de la scène observée. A cet effet, l'invention a pour objet un procédé de filtrage des signaux de brouillage pour une antenne mobile multivoie. Il comporte une phase de division en blocs temporels des signaux reçus sur chacune des voies. La durée des blocs est telle que la direction selon laquelle est reçu un signal par les différentes voies puisse être considérée comme constante au sein d'un bloc temporel. Le procédé comporte également une phase de division des blocs temporels en sous bandes de fréquence. Les sous bandes fréquentielles sont suffisamment étroites pour que les distorsions différentielles entre les voies soient négligeables au sein d'une sous bande. Il comporte aussi une phase d'estimation de la matrice d'autocorrélation du bruit dans chacune des sous bandes de fréquence. Il comporte une phase d'estimation du gain de chaque voie dans des directions (u) correspondant à un découpage en zones de la scène observée avec un pas angulaire. Chaque zone est associée à une direction constante dans chacun des blocs temporels et des sous bandes fréquentielles. Le procédé comporte enfin une phase de filtrage par combinaison linéaire des signaux reçus sur les différentes voies dans chacune des zones, pour chacun des blocs temporels et chacune des sous bandes de fréquence. Chaque combinaison linéaire dépend de la matrice d'autocorrélation du bruit propre à la sous bande de fréquence considérée et dépend des valeurs de gains des voies dans la direction correspondant à la zone considérée. Chaque combinaison linéaire permet d'annuler la composante de brouillage dans la direction correspondant à la zone considérée.

Avantageusement, la durée des blocs temporels sur chacune des voies peut être déterminée de manière à ce que, dans un bloc temporel, la variation de l'angle d'incidence du bruit de brouillage ne dépasse pas un seuil prédéterminé autour de l'angle de gain maximal de l'antenne.

Avantageusement également, les directions correspondant à un découpage en zones de la scène observée peuvent être obtenues par découpage en zones d'une image distance radiale - fréquence Doppler de la scène observée.

Dans un mode de réalisation, les combinaisons linéaires permettant d'annuler la composante de brouillage peuvent être obtenues par la méthode du maximum de vraisemblance ou encore par la méthode de minimisation sous contraintes.

Les matrices d'autocorrélation du bruit peuvent être estimées en zone claire et en zone de brouillage stationnaire.

L'écart angulaire entre les directions correspondant à un découpage en zones de la scène observée peut assurer que le bruit de brouillage est reçu avec une puissance inférieure à 10 fois la puissance du bruit thermique dans au moins une des directions.

L'invention a encore pour principaux avantages qu'elle permet d'avoir une image anti-brouillée de l'ensemble de la scène observée avec une qualité d'image uniforme quelle que soit la direction d'arrivée des signaux de brouillage. Même dans les zones qui étaient déjà correctement anti-brouillées par les anciennes méthodes, la qualité de l'image est meilleure. Par ailleurs, le procédé selon l'invention peut être mis en oeuvre par simple mise à jour logicielle des systèmes d'imagerie SAR actuels, sans aucune mise à jour matérielle. En effet, les calculateurs utilisés sont d'ores et déjà tout à fait adaptés à la charge de calcul supplémentaire induite par le procédé selon l'invention.

D'autres caractéristiques et avantages de l'invention apparaîtront à l'aide de la description qui suit faite en regard de dessins annexés qui représentent :

- la figure 1, par une vue en perspective, illustre un exemple d'antenne bi-dimensionnelle multivoie utilisable en mode SAR,
- la figure 2, par un synoptique, illustre des phases possibles du procédé selon l'invention,
- la figure 3, par une vue de profil, illustre un exemple d'antenne bi-dimensionnelle multivoie utilisable en mode SAR.

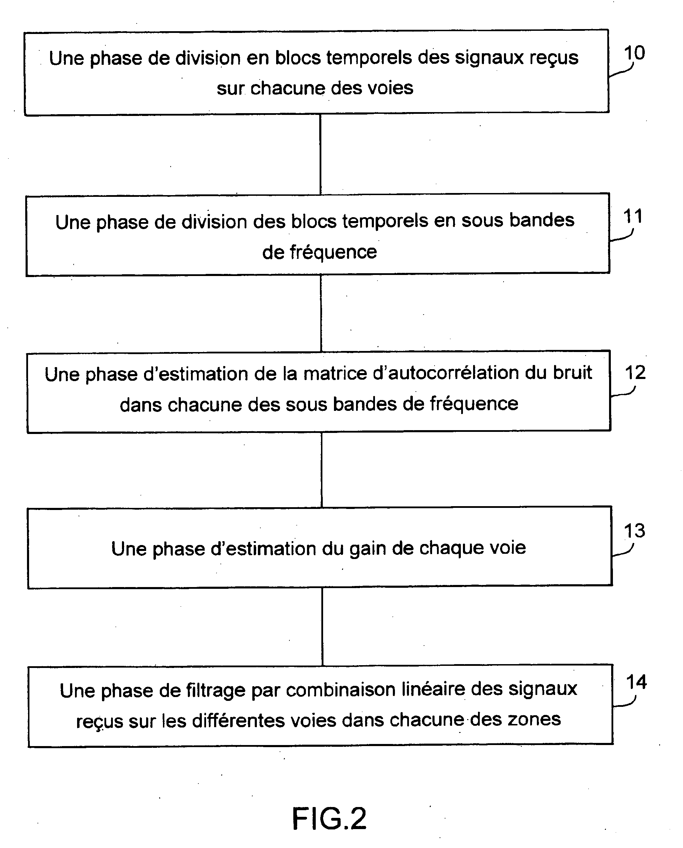

La figure 2 illustre par un synoptique les phases possibles du procédé selon l'invention.

Le procédé selon l'invention comporte notamment une phase 10 de division en blocs temporels des signaux reçus sur chacune des voies. La durée des blocs est telle que la direction selon laquelle est reçu un signal par les différentes voies puisse être considérée comme constante au sein d'un bloc temporel.

Pour une antenne aéroportée et pour un brouilleur fixe au sol, les gains avec lesquels est capté le bruit de brouillage par les différentes voies de réception de l'antenne varient au cours du temps avec l'angle d'incidence du brouilleur. Comme explicité par la suite, le procédé selon l'invention se propose d'estimer le bruit, au travers de sa matrice d'autocorrélation, dans des sous blocs temporels limités en terme de récurrences, c'est-à-dire d'une durée n'englobant qu'une partie des impulsions émises par le radar. Les blocs temporels doivent être suffisamment courts pour conserver la stationnarité du brouilleur lors de l'estimation de la matrice d'autocorrélation du bruit, mais assez longs pour conserver la finesse angulaire en gisement du creux d'annulation du brouilleur dans la formation adaptative de faisceau. Dans ce cas, il peut être montré par un raisonnement simple que le nombre d'impulsions radar $T_t^F$ dans un bloc temporel doit respecter la double inéquation (3) suivante :

$$\frac{\pi \lambda F_c}{v \sin(G_0) \cos(S_0) \theta_{3dB}\, c_{pond}} \leq T_t^F \leq \frac{\theta_{3dB}}{N_2\, \Omega} F_c \qquad (3)$$

Avec :

$\lambda$ : longueur d'onde des impulsions radar émises,
$F_c$ : fréquence de récurrence du radar,
$v$ : vitesse horizontale du centre de phase de l'antenne,
$G_0$ : angle de pointage en gisement du centre de la zone imagée,
$S_0$ : angle de pointage en site du centre de la zone imagée,
$\theta_{3dB}$ : ouverture angulaire de l'antenne à 3dB,
$C_{pond}$ : un coefficient dépendant de la pondération utilisée pour la FFT permettant de mesurer le Doppler,
N2 est un coefficient déterminé empiriquement : N2 = 15,

$\Omega$ est la vitesse de défilement angulaire de l'antenne pour un point du sol.

En mode SAR, tous les termes de la double inéquation (3) sont connus a priori. De plus, connaissant la fréquence de récurrence $F_c$ du radar SAR et donc le temps entre les impulsions, la durée des blocs temporels se déduit immédiatement grâce à $T_t^F$. Sur la durée des blocs temporels, malgré le mouvement du porteur, les gains avec lesquels est capté le bruit de brouillage par les différentes voies de réception de l'antenne peuvent être considérés constants.

Le procédé selon l'invention comporte également une phase 11 de division des blocs temporels en sous bandes de fréquence. Les sous bandes fréquentielles sont suffisamment étroites pour que les distorsions différentielles entre les voies soient négligeables au sein d'une sous bande.

Les distorsions différentielles correspondent aux différences de réponse impulsionnelle entres les voies pour un même signal perçu. Elles proviennent de diverses causes physiques : différences au niveau des filtres analogiques, différences de distance entre les centres de phase des voies spatiales, dispersions angulaires variables ou encore différences de trajets dans les circuits hyperfréquence. L'effet des perturbations engendrées par ces distorsions augmente avec la bande fréquentielle du signal. Notamment, elles perturbent l'estimation des matrices d'autocorrélation du bruit et par conséquent altèrent les performances de l'algorithme d'antibrouillage.

Le procédé selon l'invention propose de diviser la bande totale du signal en sous bandes de fréquence plus étroites et d'estimer une matrice d'autocorrélation du bruit dans chacune des sous-bandes de fréquence. Par la suite, le nombre de sous-bandes est appelé $N_{S/bande}$. Le nombre $N_{S/bande}$ est limité à la fois par le nombre d'échantillons $N_{ech}$ nécessaires à l'estimation de la matrice d'autocorrélation du bruit en zone claire et par la finesse angulaire de l'algorithme d'antibrouillage. En effet, si le nombre de sous-bandes $N_{S/bande}$ est trop important, la résolution en distance de chaque sous bande risque de devenir moins fine que la résolution $\delta D_{ini}$ nécessaire à la conservation de la finesse angulaire du creux du diagramme de rayonnement en site de l'algorithme d'antibrouillage. Le bénéfice recherché en limitant la bande de fréquence instantanée serait alors annulé par la perte due à l'échantillonnage trop large en vecteurs de contrainte. Cette double condition s'exprime par deux inéquations que l'on combine aisément dans la formulation (4) suivante :

$$N_{S/bande} < \min\left(\frac{D_0}{\tan(S_0)} \frac{\theta_{3dB}}{2\pi\,\delta D_{ini}}, \frac{N_{claire}}{N_{ech}}\right) \qquad (4)$$

Avec :

$N_{S/bande}$ : nombre de sous-bandes,
$S_0$ : angle de pointage en site du centre de la zone imagée,
$D_0$ : distance au centre de la zone imagée,
$\theta_{3dB}$ : ouverture angulaire de l'antenne à 3dB autour de son gain maximum,
$\delta D_{ini}$ : résolution distance avant la division en sous bandes,
$N_{claire}$ : nombre d'échantillons contenus dans la zone claire,
$N_{ech}$ : nombre d'échantillons de bruit nécessaire pour estimer correctement la matrice d'autocorrélation.

Le procédé selon l'invention comporte également une phase 12 de calcul de la matrice d'autocorrélation du bruit. Une matrice est calculée dans chaque sous bande de chaque bloc temporel.

Cette matrice est calculée à partir de $N_{ech}$ échantillons de vecteur bruit ($X_i$). Pour cela, il est tout d'abord impératif d'isoler une zone claire sur chaque voie au sein même du signal radar de chaque sous bande de chaque bloc temporel. Une zone claire est une zone de signal dépourvue de signal utile et dans laquelle seule du bruit thermique et du bruit de brouillage sont présents si un brouilleur émet et uniquement composée de bruit thermique en l'absence de brouilleur.

Le signal de brouillage contenu dans la zone claire doit en outre être stationnaire, condition assurée par la division en sous bloc temporel. Ensuite, la matrice d'autocorrélation du bruit est simplement déduite de la relation (5) suivante :

$$\hat{\Gamma} = \frac{1}{N_{ech}} \sum_{i=1}^{N_{ech}} X_i X_i^H \qquad (5)$$

Le procédé selon l'invention comporte également une phase 13 d'estimation du gain de chaque voie dans des directions correspondant à un découpage en zones de la scène observée avec un pas angulaire. Chaque zone est associée à une direction constante dans chacun des blocs temporels et des sous bandes fréquentielles.

Le signal SAR global provient d'une multitude de directions $u_j$. Ainsi, un signal SAR noté Z reçu par une seule voie peut s'écrire selon l'équation vectorielle (6) suivante :

$$Z = \sum_j \alpha_j \, S(\vec{u}_j) + X \qquad (6)$$

Dans l'équation (6), le vecteur X représente la somme du bruit thermique et du bruit de brouillage. Un terme $S(\vec{u_j})$ est appelé vecteur de contrainte dans la direction $u_j$ et caractérise le gain de la voie de réception considérée dans la direction $u_j$. Un terme $\alpha_j$ caractérise l'amplitude du signal dans la direction $u_j$. La direction $u_u$ introduite par la relation (1) est un cas particulier équivalent à une direction $u_j$.

Comme explicité par la suite, pour antibrouiller le signal SAR, le procédé selon l'invention se propose notamment de réaliser une combinaison linéaire des voies dans certaines directions $u_j$ de manière à minimiser la composante de bruit X. Le mode de réalisation présenté ici se propose d'utiliser un filtre optimal w, connu par ailleurs par des méthodes classiques, et ayant la propriété d'annuler le bruit. Le filtre optimal w dans la direction $u_j$ est donné par :

$$w(\vec{u}_j) = \frac{\hat{\Gamma}^{-1} \, S(\vec{u}_j)}{S^H(\vec{u}_j) \hat{\Gamma}^{-1} \, S(\vec{u}_j)},$$

où $\vec{\Gamma}_j$ est donné par la relation (5), représente la matrice d'autocorrélation du bruit X, E désignant l'espérance mathématique et H désignant le vecteur conjugué transposé. Mais la mise en oeuvre d'un tel filtre w pose de nombreuses difficultés.

Pour le signal SAR, une méthode permet d'associer à un pixel de l'image distance-Doppler de la scène observée une direction $u(\Delta g, \Delta s)$ dans le repère de l'antenne dont l'origine est au centre de phase $\bigcirc$ de l'antenne et qui est porté par l'axe de pointage de l'antenne (comme illustré par la figure 1). L'image distance-Doppler est la représentation des points du sol dans un repère où l'abscisse représente la distance au point et l'ordonnée représente la fréquence Doppler du point. Ainsi, un point du sol, donc un pixel de l'image quand il est tenu compte de la résolution SAR, est représenté sur l'image distance-Doppler par un couple (D, f) où D est une distance et f est une fréquence Doppler. Chaque pixel (D, f) est ainsi pointé par une direction $u(\Delta g, \Delta s)$ dans le repère antenne.

En effet, à un décalage $\Delta f_d$ en fréquence Doppler par rapport à la fréquence Doppler du point central correspond, au premier ordre, un décalage $\Delta g$ en gisement dans le repère de l'antenne.

Le décalage $\Delta g$ est donné par :

$$\Delta g \approx \frac{\lambda}{2v \sin(G_0)} \, \Delta f_d \qquad (7)$$

Avec :

   v : vitesse horizontale du centre de phase de l'antenne,
   $G_0$ : angle de pointage en gisement du centre de la zone imagée.

Or, en mode SAR, l'angle de gisement $G_0$ du point central de la zone imagée est connu a priori, de même que la vitesse du porteur. Ainsi, l'angle de gisement $\Delta g$ dans le repère antenne peut être calculé pour chaque point de l'image distance-Doppler.

De même, à un décalage $\Delta D$ en distance par rapport à la distance du point central de l'image correspond un décalage $\Delta S$ en site dans le repère de l'antenne. Le décalage $\Delta s$ est donné par :

$$\Delta s = -\frac{\tan(S_0)}{D_0} \Delta D \qquad (8)$$

Avec :

S$_0$ : angle de pointage en site du centre de la zone imagée,
D$_0$ : distance au centre de la zone imagée.

Or, en mode SAR, l'angle de site S$_0$ du point central de la zone imagée ainsi que sa distance à l'antenne D$_0$ sont connus a priori. Ainsi, l'angle de site ∆S dans le repère de l'antenne peut être calculé pour chaque point de l'image distance-Doppler.

Finalement, dans le repère antenne porté par l'axe de pointage, la direction (plus précisément les angles de site et de gisement) du pixel correspondant à un décalage ∆ $f_d$ en fréquence Doppler par rapport à la fréquence Doppler du point central de l'image distance-Doppler et à un décalage ∆D en distance par rapport à la distance du point central de l'image distance-Doppler s'exprime très simplement par la relation suivante :

$$\begin{pmatrix} \Delta g \\ \Delta s \end{pmatrix} = \Lambda \begin{pmatrix} \Delta f_d \\ \Delta D \end{pmatrix} \quad avec \quad \Lambda = \begin{pmatrix} \dfrac{\lambda}{2v\sin(G_0)} & 0 \\ 0 & -\dfrac{\tan(S_0)}{D_0} \end{pmatrix} \qquad (9)$$

Connaissant par la relation (9) la direction u dans le repère sphérique centré sur l'antenne et porté par l'axe de pointage correspondant à chaque pixel de l'image distance-Doppler, il reste encore à déterminer le gain de chacune des voies dans chacune de ces directions. pour estimer le filtre w.

Connaissant par la relation (9) le gisement et le site du signal SAR correspondant à un pixel de l'image distance-Doppler, il est également nécessaire de connaître la distance entre les différentes voies pour déduire le gain dans la direction u. Comme illustré par la figure 1, les voies sont par exemple espacées d'une distance d$_x$ selon l'axe (O, x) et d'une distance d$_y$ selon l'axe (O, y). Le vecteur de contrainte S$_{m,n}$(∆g, ∆s), avec (∆g, ∆s) donné par la relation (9), de la m$^{ième}$ voie sur l'axe (O, x) et de la n$^{ième}$ voie sur l'axe (O, y) selon la direction u d'un pixel, qui caractérise le gain de la voie de ligne m et colonne n dans la direction u, s'exprime par les relations (10), (11) et (12) suivantes :

$$\overrightarrow{k_{m,n}} = \frac{2\pi}{\lambda} \begin{pmatrix} m\,d_x \\ n\,d_y \\ 0 \end{pmatrix} \text{ et } \vec{u} = \begin{pmatrix} \sin(\Delta s) \\ \cos(\Delta s)\sin(\Delta g) \\ \cos(\Delta s)\cos(\Delta g) \end{pmatrix} \qquad (10)$$

$$S_{m,n}(\vec{u}) = \exp\left(j\,\overrightarrow{k_{m,n}} \bullet \vec{u}\right) \qquad (11)$$

$$S_{m,n}(\Delta g, \Delta s) = \exp\left(\frac{2j\pi}{\lambda}\left[m\,d_x \sin(\Delta s) + n\,d_y \cos(\Delta s)\sin(\Delta g)\right]\right) \qquad (12)$$

Avec :

m et n : indices respectifs de ligne et de colonne caractérisant une voie,
k$_{m,n}$ : position d'une voie repérée par les indices m et n,
d$_x$ et d$_y$: distance respective entre les lignes et les colonnes de voies,
λ : longueur d'onde des impulsions émises,
u (∆g, ∆s) : direction du pixel,
S$_{m,n}$ (u) = S$_{m,n}$ (∆g, ∆s) : gain de la voie de ligne m et colonne n dans la direction u.

Cependant, il n'est pas nécessaire d'appliquer un vecteur de contrainte à chaque pixel de l'image, car l'antibrouillage est inefficace dans une zone angulaire autour du brouilleur.

Il s'agit de déterminer un filtre $w_j$ dans chacune des directions $u_j$, Mais parmi l'infinité de directions d'où provient le signal, il faut retenir certaines directions d'arrivée $u_j$, ces directions correspondant à des composantes $u_j$ du signal SAR global exprimé par la relation (6).

Il reste à estimer l'écart angulaire entre les vecteurs de contrainte et donc le nombre de vecteurs de contrainte.

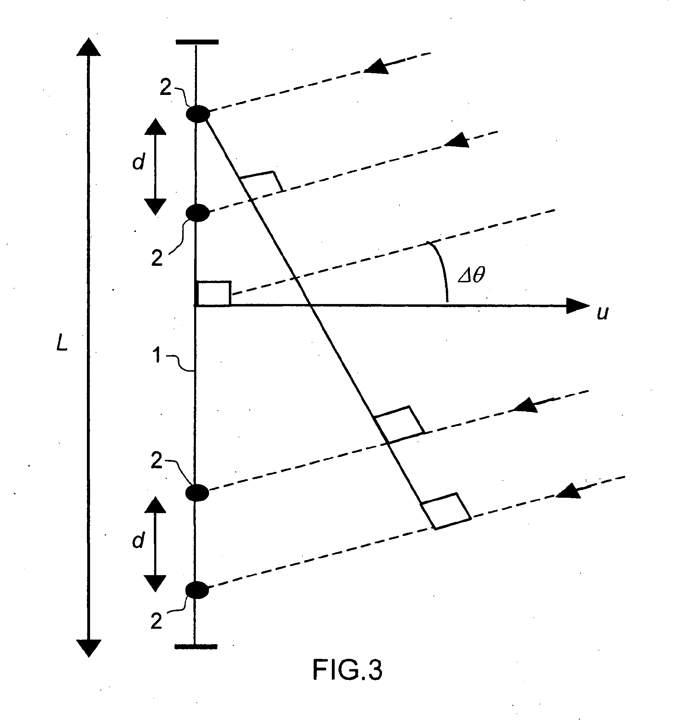

La figure 3 illustre, par une vue de profil, le même exemple d'antenne bi-dimensionnelle multivoie utilisable en mode SAR que la figure 1. L'antenne 1 est de longueur L et comporte N voies de réception identiques séparées d'une même distance d. La distance d peut être assimilée à la distance $d_x$ ou à la distance $d_y$ de la figure 1 selon le profil considéré. Par exemple, étant donné un vecteur de contrainte u, il peut être envisagé d'estimer l'écart angulaire $\Delta\theta$ entre ce vecteur de contrainte et une direction d'arrivée du brouilleur à partir de laquelle la puissance $P_b$ du brouilleur dans la direction en question devient inférieure à 10 fois la puissance de bruit thermique. Selon le profil considéré, $\Delta\theta$ est assimilable à un site $\Delta s$ ou à un gisement $\Delta g$. En effet, l'expérience montre que si la puissance de brouillage n'excède pas 10 décibels au-dessus du bruit thermique, l'image SAR garde un certain contraste dans de nombreux cas. Ainsi, en partant de l'inéquation $P_b < 10\sigma^2_0$, où $\sigma^2_0$ est la puissance de bruit thermique, il vient immédiatement l'inéquation (13) :

$$\Delta\theta > \frac{1}{2\pi}\frac{\lambda}{L} \qquad\qquad (13)$$

Avec:

    $\lambda$ : longueur d'onde de l'impulsion émise,
    L : largeur de l'antenne.

Ainsi, une discrétisation des directions d'arrivée avec un pas en site et en gisement de $\Delta\theta$ vérifiant l'inéquation (13) permet la mise en oeuvre du procédé selon l'invention. Par la suite, le nombre de vecteurs de contrainte constituant la discrétisation des directions sera appelé $N_v$. Notamment, les gains des voies sont respectivement estimés pour chacun des $N_v$ vecteurs de la discrétisation grâce aux relations (5) et (13).

Le procédé selon l'invention comporte également une phase 14 de filtrage par combinaison linéaire des signaux reçus sur les différentes voies dans chacune des zones. Pour chacun des blocs temporels et chacune des sous bandes de fréquence, chaque combinaison linéaire dépend de la matrice d'autocorrélation du bruit propre à la sous bande de fréquence considérée et dépend des valeurs de gains des voies dans la direction correspondant à la zone considérée. Chaque combinaison linéaire permet d'annuler la composante de brouillage dans la direction correspondant à la zone considérée.

Comme explicité précédemment, un principe du procédé d'antibrouillage selon l'invention est d'appliquer un filtre spécifique $w\,(\vec{u_j})$ dans chacune des directions $u_j$, de manière à minimiser par combinaison linéaire la puissance moyenne du bruit. Par exemple, l'expression formelle du filtre optimal dans la direction

$$w\,(\vec{u}_j) = \frac{\hat{\Gamma}^{-1}\,S(\vec{u}_j)}{S^H(\vec{u}_j)\,\hat{\Gamma}^{-1}\,S(\vec{u}_j)}$$

décrit précédemment peut s'obtenir par la méthode de minimisation sous contrainte ou par la méthode du maximum de vraisemblance (méthode identique pour un bruit gaussien), ces méthodes étant bien connues par ailleurs. Mais d'autres filtres obtenus par d'autres méthodes peuvent être envisagés.

Dans chacun des blocs temporels décrits précédemment, il s'agit d'estimer autant de filtres w qu'il y a de directions $u_j$ et de sous-bandes de fréquence. Le nombre de filtres $w\,(\vec{u_j})$ à l'intérieur d'un bloc temporel est donc égal à $N_v \times N_{S/bande}$. Ils se déduisent facilement des phases précédentes au cours desquelles ont été sélectionnées les directions $u_j$, ont été calculés les vecteurs de contraintes associés $S(\vec{u_j})$ ainsi que les matrices d'autocorrélation du bruit $\Gamma$ pour chacune des sous bandes de fréquence de chaque bloc temporel.

Ainsi, le procédé de filtrage selon l'invention ne propose plus un seul filtre en particulier mais un jeu de filtres, chaque filtre étant particulièrement bien adapté à la direction dans laquelle il est utilisé. En cas de survol d'un brouilleur, seulement un seul des filtres parmi plusieurs sera inefficace, celui associé à une plage de direction contenant la direction du brouilleur survolé $u_b$ (relation 1).

**Revendications**

1.  Procédé de filtrage des signaux de brouillage pour une antenne mobile multivoie, **caractérisé en ce qu'**il comporte :

    - une phase (10) de division en blocs temporels des signaux reçus sur chacune des voies, la durée des blocs étant telle que la direction (u) selon laquelle est reçu un signal par les différentes voies puisse être considérée comme constante au sein d'un bloc temporel ;
    - une phase (11) de division des blocs temporels en sous bandes de fréquence, les sous bandes fréquentielles étant suffisamment étroites pour que les distorsions différentielles entre les voies soient négligeables au sein d'une sous bande ;
    - une phase (12) d'estimation de la matrice d'autocorrélation du bruit dans chacune des sous bandes de fréquence ;
    - une phase (13) d'estimation du gain de chaque voie dans des directions (u) correspondant à un découpage en zones de la scène observée avec un pas angulaire ($\Delta\theta$), chaque zone étant associée à une direction (u) constante dans chacun des blocs temporels et des sous bandes fréquentielles ;
    - une phase (14) de filtrage par combinaison linéaire des signaux reçus sur les différentes voies dans chacune des zones, pour chacun des blocs temporels et chacune des sous bandes de fréquence, chaque combinaison linéaire dépendant de la matrice d'autocorrélation du bruit propre à la sous bande de fréquence considérée et dépendant des valeurs de gains des voies dans la direction correspondant à la zone considérée, chaque combinaison linéaire permettant d'annuler la composante de brouillage dans la direction (u) correspondant à la zone considérée.

2.  Procédé de filtrage selon la revendication 1, **caractérisé en ce que** la durée des blocs temporels sur chacune des voies est déterminée de manière à ce que, dans un bloc temporel, la variation de l'angle d'incidence du bruit de brouillage ne dépasse pas un seuil prédéterminé autour de l'angle de gain maximal de l'antenne.

3.  Procédé de filtrage selon la revendication 1, **caractérisé en ce que** les directions correspondant à un découpage en zones de la scène observée (u, $\Delta\theta$) sont obtenues par découpage en zones d'une image distance radiale - fréquence Doppler de la scène observée.

4.  Procédé de filtrage selon la revendication 1, **caractérisé en ce que** les combinaisons linéaires permettant d'annuler la composante de brouillage sont obtenues par la méthode du maximum de vraisemblance.

5.  Procédé de filtrage selon la revendication 1, **caractérisé en ce que** les combinaisons linéaires permettant d'annuler la composante de brouillage sont obtenues par la méthode de minimisation sous contraintes.

6.  Procédé de filtrage selon la revendication 1, **caractérisé en ce que** les matrices d'autocorrélation du bruit sont estimées en zone claire.

7.  Procédé de filtrage selon la revendication 1, **caractérisé en ce que** les matrices d'autocorrélation du bruit sont estimées en zone de brouillage stationnaire.

8.  Procédé de filtrage selon la revendication 1, **caractérisé en ce que** l'écart angulaire ($\Delta\theta$) entre les directions (u) correspondant à un découpage en zones de la scène observée assure que le bruit de brouillage est reçu avec une puissance inférieure à 10 fois la puissance du bruit thermique dans n'importe quelle direction ne correspondant pas à la direction du brouilleur.

**Claims**

1.  A process of filtering jamming signals for a multi-channel mobile antenna, **characterised in that** it includes:

    - a phase (10) of dividing the signals received on each of the channels into time blocks, the duration of the blocks being such that the direction (u) along which a signal is received on the different channels may be considered to be constant within a time block;
    - a phase (11) of dividing the time blocks into frequency sub-bands, the frequency sub-bands being sufficiently narrow so that the differential distortions between the channels are negligible within a sub-band;
    - a phase (12) of estimating the auto-correlation matrix of the noise in each of the frequency sub-bands;

- a phase (13) of estimating the gain of each channel in directions (u) corresponding to the division of the observed scene into zones with an angular deviation (Δθ), each zone being associated with a constant direction (u) in each of the time blocks and frequency sub-bands;

- a phase (14) of filtering by linear combination of the signals received on the different channels in each of the zones, for each time block and each frequency sub-band, each linear combination depending on the auto-correlation matrix of the noise specific to the frequency sub-band under consideration and depending on the gain values on the channels in the direction corresponding to the zone under consideration, each linear combination allowing cancellation of the jamming component in the direction (u) corresponding to the zone under consideration.

2. The filtering process according to claim 1, **characterised in that** the duration of the time blocks on each of the channels is determined so that, in one time block, the variation of the angle of incidence of the jamming noise does not exceed a predetermined threshold around the maximum gain angle of the antenna.

3. The filtering process according to claim 1, **characterised in that** the directions corresponding to the division into zones of the observed scene (u, Δθ) are obtained by dividing a radial distance-Doppler frequency image of the observed scene into zones.

4. The filtering process according to claim 1, **characterised in that** the linear combinations allowing cancellation of the jamming component are obtained by the maximum likelihood method.

5. The filtering process according to claim 1, **characterised in that** the linear combinations allowing cancellation of the jamming component are obtained by the method of minimisation under constraints.

6. The filtering process according to claim 1, **characterised in that** the auto-correlation matrices of the noise are estimated in a clear zone.

7. The filtering process according to claim 1, **characterised in that** the auto-correlation matrices of the noise are estimated in a stationary jamming zone.

8. The filtering process according to claim 1, **characterised in that** the angular deviation (Δθ) between the directions (u) corresponding to the division of the observed scene into zones ensures that the jamming noise is received at a power level that is 10 times lower than the power level of the thermal noise in any direction which does not correspond to the direction of the jammer.


**Patentansprüche**

1. Verfahren zum Filtern von Störsignalen für eine mobile Mehrkanalantenne, **dadurch gekennzeichnet, dass** es Folgendes beinhaltet:

- eine Phase (10) des Unterteilens der auf jedem der Kanäle empfangenen Signale in Zeitblöcke, wobei die Dauer der Blöcke derart ist, dass die Richtung (u), aus der ein Signal über die verschiedenen Kanäle empfangen wird, als innerhalb eines Zeitblocks konstant angesehen werden kann;

- eine Phase (11) des Unterteilens der Zeitblöcke in Frequenzsubbänder, wobei die Frequenzsubbänder so schmal sind, dass die differenziellen Verzerrungen zwischen den Kanälen innerhalb eines Subbandes vernachlässigbar sind;

- eine Phase (12) des Schätzens der Autokorrelationsmatrix des Rauschens in jedem der Frequenzsubbänder;

- eine Phase (13) des Schätzens der Verstärkung jedes Kanals in Richtungen (u), die einer Unterteilung der beobachteten Szene in Zonen mit einem Teilungswinkel (Δθ) entsprechen, wobei jede Zone mit einer konstanten Richtung (u) in jedem der Zeitblöcke und der Frequenzsubbänder assoziiert ist;

- eine Phase (14) des Filterns durch lineare Kombination der auf den verschiedenen Kanälen in jeder der Zonen empfangenen Signale, für jeden der Zeitblöcke und jedes der Frequenzsubbänder, wobei jede lineare Kombination von der Autokorrelationsmatrix des für das betrachtete Frequenzsubband spezifischen Rauschens abhängig ist und von den Verstärkungswerten der Kanäle in der Richtung abhängt, die der betrachteten Zone entspricht, wobei es jede lineare Kombination zulässt, die Störkomponente in der Richtung (u) zu löschen, die der betrachteten Zone entspricht.

**2.** Filterverfahren nach Anspruch 1, **dadurch gekennzeichnet, dass** die Dauer der Zeitblöcke auf jedem der Kanäle so bestimmt wird, dass in einem Zeitblock die Variation des Einfallswinkels des Störrauschens einen vorbestimmten Schwellenwert um den maximalen Verstärkungswinkel der Antenne nicht übersteigt.

**3.** Filterverfahren nach Anspruch 1, **dadurch gekennzeichnet, dass** die Richtungen, die der Unterteilung der beobachteten Szene (u, $\Delta\theta$) in Zonen entsprechen, durch Unterteilen eines Radialdistanz-Doppler-Frequenzbildes der beobachteten Szene in Zonen erhalten werden.

**4.** Filterverfahren nach Anspruch 1, **dadurch gekennzeichnet, dass** die linearen Kombinationen, die eine Löschung der Störkomponente zulassen, mit der Maximum-Likelihood-Methode erhalten werden.

**5.** Filterverfahren nach Anspruch 1, **dadurch gekennzeichnet, dass** die linearen Kombinationen, die eine Löschung der Störkomponente zulassen, mit der Methode der Minimierung unter Belastungsbedingungen erhalten werden.

**6.** Filterverfahren nach einem Anspruch 1, **dadurch gekennzeichnet, dass** die Autokorrelationsmatrizen des Rauschens in einer klaren Zone geschätzt werden.

**7.** Filterverfahren nach Anspruch 1, **dadurch gekennzeichnet, dass** die Autokorrelationsmatrizen des Rauschens in einer stationären Störzone geschätzt werden.

**8.** Filterverfahren nach Anspruch 1, **dadurch gekennzeichnet, dass** die Winkelabweichung ($\Delta\theta$) zwischen den Richtungen (u), die einer Unterteilung der beobachteten Szene in Zonen entsprechen, gewährleistet, dass das Störrauschen mit einer Leistung empfangen wird, die 10 mal niedriger ist als die des thermischen Rauschens in irgendeiner Richtung, die nicht der Richtung der Störquelle entspricht.

FIG.1

| Une phase de division en blocs temporels des signaux reçus sur chacune des voies | 10 |

| Une phase de division des blocs temporels en sous bandes de fréquence | 11 |

| Une phase d'estimation de la matrice d'autocorrélation du bruit dans chacune des sous bandes de fréquence | 12 |

| Une phase d'estimation du gain de chaque voie | 13 |

| Une phase de filtrage par combinaison linéaire des signaux reçus sur les différentes voies dans chacune des zones | 14 |

# FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Interrelated problems in space-time processing for SAR and ISAR. *IEE Proceedings : Radar, Sonar & Navigation,* Octobre 1998, vol. 145 (5